# EUROPÄISCHE PATENTSCHRIFT

(11) **EP 2 328 724 B1**
(45) Veröffentlichungstag und Bekanntmachung des Hinweises auf die Patenterteilung: **01.06.2016**
(21) Anmeldenummer: 09778805.3
(22) Anmeldetag: 02.10.2009
(51) Int. Cl.: B25J 9/16

(54) **KALIBRIERUNGSWERKZEUG, SYSTEM UND VERFAHREN ZUR AUTOMATISIERTEN KALIBRIERUNG UND AUSRICHTUNG EINER HANDHABUNGSVORRICHTUNG**
CALIBRATION TOOL, SYSTEM AND METHOD FOR THE AUTOMATED CALIBRATION AND ALIGNMENT OF A HANDLING DEVICE
OUTIL D'ÉTALONNAGE, SYSTÈME ET PROCÉDÉ D'ÉTALONNAGE ET D'ALIGNEMENT AUTOMATIQUES D'UN DISPOSITIF DE MANIPULATION

(30) Priorität: 03.10.2008 DE 102008049894
(43) Veröffentlichungstag der Anmeldung: 08.06.2011
(73) Patentinhaber: ABB AG, 1109 Wien (AT)
(72) Erfinder: ROTH, Michael, 1230 Wien (AT)
(74) Vertreter: Kock, Ina
(86) Internationale Anmeldenummer: PCT/EP2009/007074
(87) Internationale Veröffentlichungsnummer: WO 2010/037552

(56) Entgegenhaltungen:
- EP-A1- 1 172 184
- WO-A1-2008/046619
- JP-A- 5 337 856
- US-A- 5 751 610
- US-A1- 2003 167 103
- US-A1- 2003 200 042
- US-A1- 2004 249 595

## Beschreibung

Die Erfindung betrifft ein System und Verfahren zur automatisierten Kalibrierung und Ausrichtung einer Handhabungsvorrichtung beziehungsweise eines Handhabungsautomaten, insbesondere eines mehrachsigen Industrieroboters, sowie ein demgemäßes Kalibrierwerkzeug.

Bekanntermaßen wird die Kalibrierung des sog. Tool Center Points (TCPs) und des Werkobjektes größtenteils manuell durchgeführt. Es sind nur wenige Anwendungen bekannt bei welchen die Kalibrierung automatisch durchgeführt wird, wobei zwei unterschiedliche Zielrichtungen getrennt verfolgt werden. Eine Zielrichtung ist daraufhin ausgelegt eine möglichst kostengünstige Kalibrierungslösung anzugeben, entspricht jedoch in aller Regel nicht den Qualitätsanforderungen bei Applikationen mit geforderter, vergleichsweise hoher Genauigkeit. Die zweite Zielrichtung ist daraufhin ausgelegt Methoden und Verfahren mit hoher Vermessungsgenauigkeit einzusetzen, was in aller Regel jedoch einen erhöhten Aufwand und insbesondere hohe Kosten bedeutet.

Eine diesbezüglich vergleichsweise häufig eingesetzte beziehungsweise angewandte Methode ist die Vermessung des TCPs unter Verwendung zweier Messspitzen, wobei eine erste Messspitze auf dem jeweiligen Manipulator fixiert und eine zweite Messspitze stationär im jeweiligen Arbeitsraum des Roboters angeordnet wird. Die Vermessungsmethode basiert auf dem Aufeinanderzuführen der Messspitzen unter mehreren Orientierungen. Durch die Verwendung mehrerer Orientierungen, welche größtmögliche Unterschiede aufweisen sollten, ist die Berechnung der Lage des TCPs im Raum möglich.
Diese Methode und insbesondere deren erfolgreiche Durchführung ist dabei jedoch in großem Maße von der Erfahrung und der Konstitution des jeweiligen Bedieners abhängig, so dass die Qualität der Vermessung keineswegs konstant, sondern vielmehr vergleichsweise starken Schwankungen unterworfen ist.

Beim sog. Bulls-Eye-Verfahren, welches insbesondere für Schweißprozesse verwendet wird, wird eine Laserlichtschranke eingesetzt, wobei der Manipulator beim Start/Beginn der Messung in die/der Lichtschranke positioniert wird. Nach diesem Positioniervorgang wird die automatische Vermessung des TCPs mittels vorgegebener Routine durchgeführt. Die Problematik liegt in der Genauigkeit des Verfahrens, welche durch Reflexionen der Schweißpistolenspitze, Signallaufzeiten und Pollingzeit des CAN-Busses beeinträchtigt wird. Diese Methode ist auch für andere Anwendungen/Applikationen wie Fräsen und Bohren adaptierbar. Der Vorteil liegt in der automatischen Vermessung, so dass der Faktor Mensch keinen Einfluss auf die Genauigkeit des Verfahrens hat

Weiterhin sind Verfahren und Systeme bekannt, bei welchen zunächst zwei Inertialpositionen festgelegt werden, wobei die eine Position relativ zu der Roboterbasis und die zweite Position am Roboterarm (Greifer) fixiert festgelegt ist. Die Differenz der zwei Positionen wird durch Messen beziehungsweise mittels einschlägiger Messverfahren ermittelt und fixiert beziehungsweise aufgezeichnet. Der Roboter bewegt sich mit unterschiedlichen Orientierungen im Raum. Sobald die fixierte Distanz wieder erreicht wird, werden Orientierung und Position bestimmt. Für die Messung wird wenigstens ein Sensor verwendet. Aus den ermittelten Messdaten wird dann ein entsprechender Kalibrierungsfaktor ermittelt.

Eine weitere Möglichkeit ist durch die Vermessung mittels Planscheibe gegeben, wobei die Position des TCPs wird über die Bewegung des Roboters ermittelt. Der Roboter fährt in eine definierte Startposition. Bei diesem Messprinzip kommen mehrere Planscheiben zum Einsatz. Der Roboter bewegt sich von der Startposition bis zur Berührung der ersten Planscheibe, wobei die entsprechende Position aufgezeichnet beziehungsweise gespeichert wird. Diese Position wird nicht nur über die Kinematik des Roboters festgestellt, sondern über das vorhandene Messsystem in den Planscheiben. Nach Abspeicherung der Position bewegt sich der Roboter wieder zur Startposition und diese Prozedur wird mit den anderen Planscheiben wiederholt. Die Lage des TCPs kann dann durch die gespeicherten Positionen berechnet werden.
Als weitere Kalibrierungsverfahren sind das sog. Meßtasterverfahren sowie das sog. Seilzugverfahren bekannt.
Auch ist bekannt den TCP eines Handhabungsgerätes mittels eines Lasertrackers zu bestimmen, wobei üblicherweise eine Vermessung des Referenzpunktes bzw. Koordinatensystem, d.h. im Falle eines Roboters das tool0 (der Handflansch), das Urkoordinatensystem für alle Werkzeuge, vorgenommen wird. Die Vermessung wird mit einem hochgenauen Führungsgegenstand, wie beispielsweise mit einer Kugel, welche geringe Toleranzen in deren Abmessungen aufweißt, durchgeführt. In diese Vermessungskugel werden Reflektoren integriert, welche den Laserstrahl des Trackers reflektieren, wodurch die Führung dieses Trackers ermöglicht ist. Nach der Vermessung des tool0 ist das Referenzkoordinatensystem für den Tracker bekannt. Um nun den notwendigen TCP zu bestimmen wird das Werkzeug auf das Handhabungsgerät montiert und die Vermessung mit dem Führungsgegenstand wird mit dem neuen Werkzeug wiederholt. Die Vermessungsergebnisse werden für die Bekanntgabe der Koordinaten des TCPs verwendet, d.h. die
Koordinatenunterschiede zwischen tool0 und dem neuen Werkzeug werden ermittelt.

Das Dokument JP 5 337856 A betrifft ein Kalibrierwerkzeug für eine Handhabungsvorrichtung mit einem ersten Führungselement zur Anordnung am distalen Ende der Handhabungsvorrichtung vorgesehen ist, und ein zweites Führungselement zur Kennzeichnung eines Koordinatenpunktes und einer Orientierung des TCP, wobei die Führungselemente eine konische Form aufweisen und derart aufeinander angepasst und zueinander kompatibel und komplementär sind, dass das eine Element in das dazu kompatible andere Element einführbar ist und bei ausgeschaltetem Antrieb und Bremse der distalen Achse der Handhabungsvorrichtung die Bewegung der distalen Achse unter der Einwirkung der Gewichtskräfte in die Kalibrierposition ausführbar ist.

Das Dokument US 5 751 610 A offenbart unter anderem auch ein Verfahren zur automatisierten Kalibrierung und Ausrichtung einer Handhabungsvorrichtung, wobei mittels einer an einer Handhabungsvorrichtung angeordneten Messanordnung sowie einem Kalibrierwerkzeug mit einem erstem und zweitem Führungselement die zwischen den Führungselementen wirkende Kraft und Moment als Regelgröße beim Aufeinanderzufahren der Führungselementen erfasst und im Zusammenwirken von Messanordnung und Kalibrierwerkzeug mittels einer Regeleinrichtung anhand der erfassten Regelgrößenmesswerte eine Anpassung der Bewegung der Handhabungsvorrichtung durchgeführt wird, derart, dass bei Einführen und/oder Eingreifen des einen Führungselementes in das jeweilige andere Führungselement die Handhabungsvorrichtung automatisiert zu den notwendigen Kalibrierpositionen geführt wird.

Alle vorstehend aufgezeigten bekannten Verfahren oder die ihnen zu Grunde liegenden Systeme sind entweder vergleichsweise aufwendig oder liefern nicht hinreichend genaue Ergebnisse.

*Demgemäß liegt der Erfindung die Aufgabe zu Grunde eine effiziente Möglichkeit zur automatisierten Kalibrierung einer Handhabungsvorrichtung, insbesondere durch Ermittlung beziehungsweise Vermessung des TCP sowie eines Werkobjektes, mit hinreichender Genauigkeit anzugeben und bereitzustellen.*

Zur Lösung der vorgenannten Aufgabe wird ein Kalibrierungswerkzeug beziehungsweise Kalibrierwerkzeug vorgeschlagen, welches die Merkmale des Anspruchs 1 umfasst.
Vorteilhafte Ausgestaltungen und Weiterbildungen sowie ein entsprechendes System und Verfahren zur automatisierten Kalibrierung und Ausrichtung einer Handhabungsvorrichtung sind in weiteren Ansprüchen und der nachfolgenden Beschreibung angegeben.

Das erfindungsgemäße Kalibrierwerkzeug für eine Handhabungsvorrichtung umfasst zumindest zwei Führungselemente, wobei wenigstens ein erstes Führungselement zur Anordnung am distalen Ende der Handhabungsvorrichtung vorgesehen ist, und wenigstens ein zweites Führungselement zur Kennzeichnung eines Koordinatenpunktes und/oder einer Orientierung, insbesondere des TCP oder eines Werkobjektes, vorgesehen ist und wobei das wenigstens eine erste sowie das wenigstens eine zweite Führungselement derart aufeinander angepasst und/oder zueinander kompatibel und/oder komplementär sind, dass das eine Element in das dazu kompatible andere Element einführbar ist und/oder ein Eingriff des einen Elemente in das jeweils andere Element bewirkbar ist und/oder jeweils zwei komplementäre Elemente passgenau ineinander anordenbar sind.

Dabei wird lediglich auf die relative Bewegung der beiden komplementären Führungselemente abgestellt, wobei für die nachfolgenden Betrachtungen unerheblich bleibt ob das eine Element bewegt und in das andere Element eingeführt oder das eine Element bewegt und über das andere Element geführt beziehungsweise gestülpt wird. Es kommt stets nur auf die Relativbewegung der beiden Führungselemente zueinander an, so dass aus dieser Anschauung heraus stets davon gesprochen und ausgegangen werden kann, dass ein Element in das andere eingeführt wird.

Das erfindungsgemäße Werkzeug weist wenigstens eines der Führungselemente einen sich zumindest über einen Teilbereich des Elements erstreckenden Konus auf, so dass eine leichtere Ineinanderführung des ersten und zweiten Führungselementes und eine verbesserte Passgenauigkeit beziehungsweise ein passgenauerer Sitz ermöglicht wird.

Erfindungsgemäß ist das wenigstens eine erste oder zweite Führungselement im Wesentlichen zylindrisch, insbesondere als Stift oder Stab oder Dorn oder Zapfen, ausgebildet, wobei grundsätzlich unterschiedliche geometrische Querschnittsflächen, wie beispielsweise elliptisch, kreisförmig, dreieckig oder aber auch vier und mehreckig möglich sind.

Erfindungsgemäß ist das wenigstens eine erste oder zweite Führungselement als im Wesentlichen zylindrische Buchse und/oder Becher ausgebildet, wobei grundsätzlich unterschiedliche geometrische Querschnittsflächen, wie beispielsweise elliptisch, kreisförmig, dreieckig oder aber auch vier und mehreckig möglich sind.
In einer weiteren Ausgestaltung umfasst das Kalibrierwerkzeug wenigstens einen Aufnehmer zur Aufnahme oder Anordnung wenigstens eines zweiten Führungselementes.
In einer weiteren Ausgestaltung umfasst der Aufnehmer zur Markierung beziehungsweise Kalibrierung des TCP (Tool Center Point) wenigstens vier zweite Führungselemente.
Weiterbildend ist das jeweilige zweite Führungselement bei stiftartiger Ausbildung an den Aufnehmer angeformt und/oder einstückig mit diesem ausgebildet oder aber, insbesondere lösbar, an diesem angeordnet. Entsprechend kann das jeweilige zweite Führungselement auch an ein jeweiliges Werkobjekt angeformt oder an diesem angeordnet sein.
Weiterbildend ist das jeweilige zweite Führungselement bei buchsen- oder becherartiger artiger Ausbildung an den Aufnehmer angeformt und/oder einstückig mit diesem ausgebildet oder aber, insbesondere lösbar, an diesem angeordnet. Entsprechend kann das jeweilige zweite Führungselement auch an ein jeweiliges Werkobjekt angeformt oder an diesem angeordnet sein.
Alternativ dazu kann das jeweilige zweite Führungselement bei buchsen- oder becherartiger Ausgestaltung auch als Ausnehmung die den Aufnehmer und/oder das Werkobjekt eingeformt sein.
Die lösbare Anordnung des Führungsmittels am Aufnehmer und/oder dem Werkobjekt kann dabei insbesondere durch Verschraubung oder Verrastung oder Klemmung bewirkt sein, wobei entsprechend komplementäre Befestigungsmittel am jeweiligen Führungsmittel und Werkobjekt und/oder Aufnehmer vorgesehen sind, wie Gewindestift und Gewindebuchse, Rasthaken beziehungsweise -Nasen und -Öse oder entsprechende Klemmmittel, wie beispielsweise Buchsen, Nuten, insbesondere auch in Schwalbenschanzform, und diesbezügliche Federelemente.

Erfindungsgemäß ist das jeweilige Führungsmittel bei stiftartiger Ausgestaltung im oberen, nämlich dem Werkobjekt sowie dem Aufnehmer abgewandten und dem jeweilig komplementären Führungsmittel zugewandten Endbereich, spitz zulaufend, konisch zugespitzt oder abgerundet ausgebildet.

Erfindungsgemäß ist das jeweilige stiftartige Führungsmittel insgesamt konisch, das heißt vom Boden zur Spitze hin sich verjüngend ausgestaltet und/oder sich in Längsrichtung verjüngend ausgebildet ist.
Auch ist vorsehbar, dass das jeweilige Führungsmittel mehrere Teilbereiche umfasst, welche einen konischen Verlauf, das heißt mit einer sich über eine Länge ändernder Querschnittsfläche, insbesondere sich änderndem Durchmesser und/oder Umfang und/oder lichte Weite, oder einen gleichmäßigen beziehungsweise konstanten Verlauf, das heißt, mit einer sich über eine vorbestimmte Teilbereichslänge gleichbleibender Querschnittsfläche, insbesondere gleichbleibendem Durchmesser und/oder Umfang und/oder lichte Weite.

In einer weiteren Ausgestaltung weist das erste Führungsmittel ein Kupplungs- und/oder Kopplungselement zur Anordnung am distalen Ende einer Handhabungsvorrichtung, insbesondere eines mehrachsigen Industrieroboters auf.

Erfindungsgemäß weist das becher- oder buchsenartig ausgebildete erste oder zweite Führungselement im Bodenbereich beziehungsweise in Bodennähe wenigstens einen Entlüftungskanal, insbesondere eine Entlüftungsbohrung auf, so dass bei Einführen des jeweils komplementären stiftartigen Führungselementes die eingeschlossene Luft entweichen kann.

Erfindungsgemäß können alternativ oder ergänzend dazu in das jeweilige stiftartige Führungswerkzeug seitlich in Längsrichtung verlaufende Rillen oder Nuten eingeformt oder eingearbeitet sein, damit die beim Einführen eingeschlossene Luft über diese Rillen oder Nuten entweichen kann und ein passgenauer Sitz gegeben ist. In einer weiteren Ausgestaltung ist die lichte Weite eines Teilbereichs des becher- oder buchsenartig ausgebildeten Führungselementes und die Querschnittsfläche, insbesondere der Durchmesser und/oder Umfang, eines Teilbereichs des stiftartigen Führungselementes derart aufeinander angepasst und abgestimmt, dass nach Einführen des stiftartigen Elementes in das becher- oder buchsenartigen Elementen ein passgenauer und/oder formschlüssiger und/oder kraftschlüssiger Sitz und/oder Verbindung beider Elemente gegeben ist.
Weiterhin wird die gestellte Aufgabe auch durch ein System zur automatisierten Kalibrierung und Ausrichtung einer Handhabungsvorrichtung gelöst, welche eine Handhabungsvorrichtung, insbesondere einen Roboter, sowie wenigstens eine Messanordnung zur Erfassung wenigstens einer Regelgröße, sowie ein Kalibrierwerkzeug der vorbeschriebenen Art, mit wenigstens einem am distalen Ende der Handhabungsvorrichtung angeordneten ersten Führungselement, sowie wenigstens einem an einem Werkobjekt vorgesehenen zum ersten Element komplementären zweiten Führungselement aufweist und wobei eine Regeleinrichtung vorgesehen ist, welche bei Einführen des einen Führungselementes in das jeweilige andere Führungselement, insbesondere entlang einer vorbestimmbaren Koordinatenachse oder Richtung, im Zusammenwirken von Messanordnung und Kalibrierwerkzeug anhand der wenigstens einen Regelgröße die Handhabungsvorrichtung automatisiert zu den notwendigen Kalibrierpositionen führt.

Als Werkobjekt wird dabei auch der Aufnehmer des Kalibrierwerkzeugs erachtet.

Demgemäß wird die jeweilige Handhabungsvorrichtung, insbesondere der mehrachsige Industrieroboter automatisch in die für eine Kalibrierung notwendigen Endlagen gezwungen. Aus dieser Erkenntnis folgt, dass die Genauigkeit der Kalibrierung nur von den mechanischen Eigenschaften des Kalibrierwerkzeuges, wie z.B. Fertigungsgenauigkeit, und nicht mehr von der Genauigkeit des Roboters abhängig ist. Die Kalibrierung wird mittels mechanischer Zwangsführung bewirkt, welche durch das Kalibierwerkzeug im Zusammenwirken mit der Messanordnung, insbesondere dem Kraftsensor bewirkt wird.

In einer weiteren Ausgestaltung umfasst das Kalibrierwerkzeug systemgemäß wenigstens einen Aufnehmer zur Aufnahme oder Anordnung des wenigstens einen zweiten Führungselementes, wobei zur Markierung beziehungsweise Kalibrierung des TCP (Tool Center Point) wenigstens drei zweite Führungselemente vorgesehen sind.

Bis zu maximal drei der jeweilig eingesetzten zweiten Führungselemente sind dabei vorzugsweise rechtwinkelig zueinander ausgerichtet.

Vorteilhaft ist weiterhin eine Steuerungseinrichtung zur Prozesssteuerung und/oder Bewegungssteuerung der Handhabungsvorrichtung vorsehbar.

In vorteilhafter Ausgestaltung Erfindung ist wenigstens eine Schnittstelle zur drahtgebundenen oder drahtlosen Kommunikation und/oder Datenübertragung vorgesehen, über welche die ermittelten Objektkoordinatenpunkte und/oder die TCP-Koordinaten an die Steuerungseinrichtung der Handhabungsvorrichtung übermittelbar sind.

Eine weitere Ausgestaltung sieht vor, dass die Regeleinrichtung in die Steuerungseinrichtung integrierbar ist und/oder als Bestandteil der Steuerungseinrichtung ausgebildet ist, wobei alternativ die Regeleinrichtung auch in die Messanordnung integrierbar und/oder als Bestandteil der Messanordnung ausgebildet sein kann.

Vorteilhaft kann durch Bestimmung der Bahnkoordinaten und/oder des optimierten Bahnverlaufs eine Kalibrierung des Werkzeugs relativ zum Werkstück bewirkt sein.

Eine Weiterbildung des Systems sieht vor, den jeweiligen Kalibrier- und/oder Ausrichtungsprozess unter Berücksichtigung vorbestimmbarer Parameter ein- oder mehrmalig zu durchlaufen, bis die jeweils ermittelten Koordinatenpunkte hinreichend genau ermittelt und/oder bestätigt sind und/oder reproduzierbar innerhalb vorbestimmbarer Toleranzen liegen.

Vorteilhaft ist eine mehrachsige Handhabungsvorrichtung, insbesondere eine fünf- oder sechsachsige Handhabungsvorrichtung, wie beispielsweise ein sechsachsiger Industrieroboter, oder eine einachsige Handhabungsvorrichtung einsetzbar, wobei - in Weiterführung des Systems - das Koordinaten- beziehungsweise Bezugssystem mindestens einer Achse der Handhabungsvorrichtung als Referenzrichtung bei der Kalibrierung einsetzbar ist.

Auch ist die Kalibrierung in Weiterbildung des Systems, insbesondere in Abhängigkeit vorbestimmbarer Parameter und/oder Umbebungsbedingungen, beispielsweise positions- und/oder lageabhängig und/oder beeinflusst durch Kanten, Materialübergänge, Oberflächenrauhigkeiten, kontinuierlich oder zyklisch oder diskontinuierlich durchführbar, wobei der Kalibriervorgang insbesondere auch programmgesteuert durchlaufen werden kann beziehungsweise durchlaufen wird.

Wenigstens eine Messanordnung ist dabei insbesondere am distalen Ende der Handhabungsvorrichtung zwischen Handhabungsvorrichtung und dem wenigstens einen ersten Führungselement angeordnet und/oder mit diesen physisch verbunden.

Auch kann vorgesehen sein, dass eine Haltevorrichtung zur Aufnahme des wenigstens einen ersten Führungselementes vorhanden ist und/oder dieses mit dem distalen Ende der Handhabungsvorrichtung lösbar verbunden ist.

Die Verbindung kann dabei insbesondere als Schraub-, Schweiß-, Klemm-, Bajonett-, Magnet- oder Flanschverbindung ausgestaltet sein.

in einer bevorzugten Ausgestaltung weist wenigstens eine Messanordnung wenigstens einen Sensor zur Erfassung von Kräften und/oder Momenten und/oder Kraft- und/oder Momentendifferenzen auf, wobei insbesondere einer der nachfolgenden Sensorarten Verwendung findet:
- Piezoelektrischer Sensor, bei einem piezoelektrischen Sensor wird mittels Druck, also Kraft pro Fläche, in einem Kristall eine elektrische Spannung hervorgerufen, wobei im Kristall elektrische Ladungen getrennt werden (piezoelektrischer Effekt). Die elektrische Spannung ändert sich dabei in einem vorbestimmten Bereich proportional zur Kraft. Dieser Effekt funktioniert auch umgekehrt, so dass es bei Anlegen einer elektrischen Spannung an den piezoelektrischen Sensor zu einer Verformung desselben kommt. Piezoelektrische Sensoren bieten darüber hinaus etliche Vorteile, beispielsweise deren Unempfindlichkeit gegenüber hohen Temperaturen, es ist keine äußere Spannungsversorgung erforderlich und deren Wirkungsgrad ist vergleichsweise hoch.
- Kraftaufnehmer, beim Einsatz von Kraftaufnehmern wird aufgrund von Krafteinwirkung ein Federelement elastisch verformt, wobei die Kraftaufnahme in vorgeschriebener Richtung zu erfolgen hat. Die durch Krafteinwirkung hervorgerufene Verformung des Federkörpers, in aller Regel Metall, wird über Dehnungsmessstreifen in elektrische Spannung umgewandelt. Dann wird beispielsweise über einen entsprechend vorsehbaren Messverstärker die durch Krafteinwirkung hervorgerufene elektrische Spannung und damit die Dehnungsänderung registriert und/oder kann aufgrund der elastischen Eigenschaften des Federkörpers in einen Kraftmesswert umgerechnet werden.
- Differenzdruckmesser, bei welchem die Differenz zweier Absolutdrücke, der so genannte Differenzdruck, gemessen wird. Der Differenzdrucksensor kann dabei zwei Messkammern aufweisen, die durch eine Membran hermetisch voneinander getrennt sind. Die messbare Auslenkung der Membran ist dann ein Maß für die Größe des Differenzdruckes. Die Kammern können dabei mit Flüssigkeit, insbesondere auch mit einem Gel entsprechender Viskosität gefüllt sein.
   in einer Ausgestaltung des Systems ist wenigstens eine Messanordnung zur Kraft- und/oder Momentenbestimmung beziehungsweise Kraft- und/oder Momentendifferenzbestimmung im Bereich wenigstens einer der Achsen beziehungsweise Drehachsen der Handhabungsvorrichtung angeordnet.

Systemgemäß kann vorgesehen sein, dass wenigstens eine Messanordnung als Teil der Kinematik beziehungsweise des kinematischen Systems und/oder des Bewegungsapparates der Handhabungsvorrichtung ausgebildet ist.

Auch ist vorsehbar, dass erfasste Regelgrößenmesswerte und/oder das jeweils aus ihnen gebildete beziehungsweise resultierende Messsignal wenigstens einer Messanordnung als Absolutwerte ausgegeben und/oder weitergeleitet werden.

Alternativ ist vorsehbar, dass die entsprechenden Werte und/oder Signale in bzw. als Relativwerte ausgegeben und/oder weitergeleitet werden.

Auch dass die erfassten Regelgrößenmesswerte und/oder das jeweilig resultierende Messsignal als Analog- oder Digitalsignal ausgegeben und/oder weitergeleitet werden ist vorteilhaft vorsehbar, wobei insbesondere entsprechende Schnittstellen beispielsweise in Form von D/A- und/oder A/D-Wandler vorzusehen sind.

Weiterhin kann systemgemäß vorgesehen sein, dass Regelgrößenmesswerte und/oder das sich aus ihnen ergebende beziehungsweise resultierende Messsignal über ein externes Steuerungssystem in die Steuerungseinrichtung der Handhabungsvorrichtung weitergeleitet und die Bewegung der Handhabungsvorrichtung beim automatisierten Kalibriervorgang und bei Einanderzuführung des jeweiligen ersten und zweiten Führungselementes und/oder Einführung des ersten in das zweite Führungselementes oder umgekehrt dahingehend angepasst werden.

Eine vorteilhafte Ausgestaltung sieht vor, dass eine Messung beziehungsweise Erfassung physikalischer Größen, insbesondere relevanter Prozessgrößen, aus dem Prozess heraus bewirkt ist, das heißt während der Kalibrierung und/oder Ausrichtung zu einem Werkobjekt.

Systemgemäß ist vorsehbar, dass anhand der erfassten Regelgrößenmesswerte im Zusammenwirken von Messanordnung, Regeleinrichtung und Steuerungseinrichtung Kalibrierungen, Ausrichtungen, Koordinatenpunkterfassungen nahezu vollautomatisch und/oder in vergleichsweise kurzen Zeiten mit vergleichsweise geringem Aufwand ausführbar sind.

Bei der erfassten Regelgröße kann es sich dabei um eine ein- oder mehrdimensionale Größe, beispielsweise eine vektorielle Größe, insbesondere um einen Kraftvektor handeln, oder um einen Koordinatenpunkt ein einem dreidimensionalen Raum.

Weiterhin wird die gestellte Aufgabe auch durch ein entsprechendes Verfahren zur automatisierten Kalibrierung und/oder Ausrichtung einer Handhabungsvorrichtung mit den Merkmalen des Anspruchs 14 gelöst.

Für die verfahrensgemäße Durchführung einer Kalibrierung des TCPs oder des Werkobjektes ist das sog. Teachen von Positionen notwendig, wobei die Handhabungsvorrichtung mittels Steuerkonsole beziehungsweise Steuereinrichtung in die gewünschte Position gefahren oder dirigiert wird. Alle angefahrenen Koordinatenpunkte werden aufgezeichnet. Dieser Schritt wird solange wiederholt, bis alle erforderlichen Positionen aufgezeichnet und automatisiert abrufbar beziehungsweise anfahrbar sind.

Die Grundlage der Funktion dieses System ist die Technologie ForceControl (FC). Diese Technologie ermöglicht, dass der Roboter auf externe Kräfte reagiert, das heißt die Mechanik des Roboters verändert anhand der Einstellungen des Force Controllers - im Wesentlichen eine Messanordnung mit Kraftsensor und Regeleinrichtung, welche mit der Steuereinrichtung der Handhabungsvorrichtung zusammenwirkt - die Position des Endeffektors (Werkzeug oder Führungselement) abhängig von den externen Kräften. Diese Eigenschaft wird verfahrensgemäß auch für die Kalibrierung und/oder Ausrichtung der Handhabungsvorrichtung herangezogen.

Dem Verfahren zur Kalibrierung und/oder Ausrichtung einer Handhabungsvorrichtung, welches auf einem demgemäßen System ausführbar ist, liegt zugrunde, dass die jeweilige Handhabungsvorrichtung mittels Kalibrierwerkzeug zu den notwendigen Kalibrierpositionen geführt wird, das heißt die Handhabungsvorrichtung beziehungsweise dessen Endeffektor wird, in Wechselwirkung mit dem Kalibrierwerkzeug, automatisiert in die notwendigen Endlagen gezwungen und/oder geführt. Aus dieser Erkenntnis folgt, dass die Genauigkeit der Kalibrierung nur von den mechanischen Eigenschaften des Kalibrierwerkzeuges, wie beispielsweise Fertigungsgenauigkeit, und nicht mehr von der Genauigkeit der Handhabungsvorrichtung und/oder deren Bediener abhängig ist. Die Kalibrierung wird mittels mechanischer Zwangsführung durchgeführt, welche durch das Kalibierwerkzeug im Zusammenwirken mit dem Kraftsensor bewirkt wird. Dieses Verfahren kann für die TCP- und Werkobjekt-Kalibrierung verwendet werden, des Weiteren ist die Kalibrierung weitestgehend automatisch beziehungsweise automatisiert möglich.

Da die Kalibrierung automatisiert und/oder automatisch durchgeführt werden kann, besteht die Möglichkeit der Nachkalibrierung während der Produktion. Die Nachkalibrierung ist notwendig nach Kollisionen oder einer hohen Anzahl an Zyklen. Im Gegensatz zu den meisten Lösungsansätzen führt nicht der Roboter, sondern Roboter wird von einem System zu definierten Punkten geführt.

Verfahrensgemäß wird mittels wenigstens einer an einer Handhabungsvorrichtung angeordneten Messanordnung sowie einem vorbeschriebenen Kalibrierwerkzeug wenigstens eine Regelgröße beim Aufeinanderzufahren von erstem und zweitem Führungselement, insbesondere entlang einer vorbestimmbaren Koordinatenachse oder Richtung, erfasst und im Zusammenwirken von Messanordnung und Kalibrierwerkzeug, insbesondere erstem sowie zweiten Führungsmittel, mittels einer Regeleinrichtung anhand der erfassten Regelgrößenmesswerte eine Anpassung der Bewegung beziehungsweise der Bewegungsbahn der Handhabungsvorrichtung durchgeführt, derart, dass bei Einführen und/oder Eingreifen des einen Führungselementes in das jeweilige andere Führungselement die Handhabungsvorrichtung beziehungsweise deren Führungselement automatisiert zu den notwendigen Kalibrierpositionen und/oder in die notwendigen Endlagen gezwungen und/oder geführt wird.

Weiterhin kann dabei vorgesehen sein, dass als Regelgröße die entlang wenigstens einer vorbestimmbaren Richtung zwischen erstem und zweitem Führungselement wirkende Kraft und/oder Moment und/oder deren Unterschiede zu wenigstens einem vorbestimmbaren Referenzwert erfasst wird.

Insbesondere wird die Anpresskraft beziehungsweise Auflagekraft zwischen erstem und zweitem Führungselement erfasst und/oder in Weiterführung des Verfahrens auf einen vorbestimmbaren Referenzwert geregelt.

Auch ist vorteilhaft vorsehbar, dass eine Steuerungseinrichtung zur Prozesssteuerung und/oder Bewegungssteuerung der Handhabungsvorrichtung eingesetzt wird.

Als Basis für das automatisierte Kalibrieren ist verfahrensvorbereitend vorteilhaft vorsehbar, dass erstes und zweites Führungselement näherungsweise durch manuelles und/oder halbautomatisches Anfahren und/oder Führen bis zum Eingreifpunkt aufeinander zu bewegt werden und/oder die Steuerungseinrichtung der Handhabungsvorrichtung trainiert wird.

Verfahrensgemäß kann vorgesehen sein, dass wenigstens eine Schnittstelle zur drahtgebundenen oder drahtlosen Kommunikation und/oder Datenübertragung verwendet wird, über welche die angepassten Bahnkoordinaten und/oder der jeweils angepasste Bahnverlauf und/oder die erfassten Kalibrierungskoordinaten beziehungsweise Koordinatenpunkte an die Steuerungseinrichtung der Handhabungsvorrichtung übermittelt werden.

Verfahrensgemäß ist eine mehrachsige Handhabungsvorrichtung, insbesondere eine fünfachsige oder sechsachsige Handhabungsvorrichtung, beispielsweise ein sechsachsiger Industrieroboter, oder auch eine einachsige Handhabungsvorrichtung einsetzbar.

Weiterhin ist vorsehbar, dass das Koordinatensystem und/oder Bezugssystem mindestens einer Achse der Handhabungsverrichtung als Referenzrichtung bei der Bestimmung der Kalibrierungskoordinaten und/oder der Bahnkoordinaten eingesetzt wird.

In einer vorteilhaften Weiterbildung weist wenigstens eines der Führungselemente einen sich zumindest über einen Teilbereich des Elements erstreckenden Konus auf, so dass eine leichtere Ineinanderführung beziehungsweise ein einfacherer Eingriff von erstem und zweitem Führungselement durchführbar und eine verbesserte Passgenauigkeit beziehungsweise ein passgenauerer Sitz bewirkbar wird.

In einer weiteren Ausgestaltung umfasst das Kalibrierwerkzeug systemgemäß wenigstens einen Aufnehmer zur Aufnahme oder Anordnung des wenigstens einen zweiten Führungselementes, wobei zur Markierung beziehungsweise Kalibrierung des TCP (Tool Center Point) wenigstens drei zweite Führungselemente eingesetzt werden.

Bis zu maximal drei der jeweilig eingesetzten zweiten Führungselemente werden dabei vorzugsweise rechtwinkelig zueinander ausgerichtet.

Zur Kalibrierung mittels TCP wird in einer weiteren Verfahrensausgestaltung ein Kalibrierwerkzeug mit wenigstens einem Aufnehmer zur Aufnahme oder Anordnung von wenigstens drei, insbesondere jedoch vier zweiten Führungselementen, herangezogen, welche vornehmlich senkrecht zueinander angeordnet werden, wobei insbesondere jeweils stets drei davon senkrecht zueinander angeordnet werden. In vorteilhafter Ausführung kann dabei der TCP aus dem Schnittpunkt ihrer Symmetrieachse in Längsrichtung ermittelt werden.

Weiterbildend ist das jeweilige zweite Führungselement bei stiftartiger Ausbildung an den Aufnehmer angeformt und/oder einstückig mit diesem ausgebildet oder aber, insbesondere lösbar, an diesem angeordnet. Entsprechend kann das jeweilige zweite Führungselement auch an ein jeweiliges Werkobjekt angeformt oder an diesem angeordnet sein.

Weiterbildend ist das jeweilige zweite Führungselement bei buchsen- oder becherartiger artiger Ausbildung an den Aufnehmer angeformt und/oder einstückig mit diesem ausgebildet oder aber, insbesondere lösbar, an diesem angeordnet. Entsprechend kann das jeweilige zweite Führungselement auch an ein jeweiliges Werkobjekt angeformt oder an diesem angeordnet sein.

Alternativ dazu kann das jeweilige zweite Führungselement bei buchsen- oder becherartiger Ausgestaltung auch als Ausnehmung die den Aufnehmer und/oder das Werkobjekt eingeformt sein.

Durch eine lösbare Anordnung des Führungsmittels am Aufnehmer und/oder dem Werkobjekt ist das jeweilige Führungselement, insbesondere bei hochgenauer und/oder hochpräziser Fertigung mit geringen Toleranzen, vergleichsweise häufig wieder verwendbar.

Die lösbare Verbindung wird dabei insbesondere durch Verschraubung oder Verrastung oder Klemmung bewirkt, wobei entsprechend komplementäre Befestigungsmittel am jeweiligen Führungsmittel und Werkobjekt und/oder Aufnehmer vorgesehen sind, wie Gewindestift und Gewindebuchse, Rasthaken beziehungsweise -Nasen und -Öse oder entsprechende Klemmmittel, wie beispielsweise Buchsen, Nuten, insbesondere auch in Schwalbenschwanzform, und diesbezügliche Federelemente.

Um eine vereinfachte Zusammenführung beziehungsweise Ineinanderführung von erstem und zweitem Führungsmittels zu erreichen ist auch vorsehbar, dass das jeweilige Führungsmittel mehrere Teilbereiche umfasst, welche einen konischen Verlauf, das heißt mit einer sich über eine Länge ändernder Querschnittsfläche, insbesondere sich änderndem Durchmesser und/oder Umfang und/oder lichte Weite, oder einen gleichmäßigen beziehungsweise konstanten Verlauf, das heißt, mit einer sich über eine vorbestimmte Teilbereichslänge gleichbleibender Querschnittsfläche, insbesondere gleichbleibendem Durchmesser und/oder Umfang und/oder lichte Weite.

In einer weiteren Ausgestaltung wird das erste Führungsmittel mittels eines Kupplungs- und/oder Kopplungselement am distalen Ende der jeweiligen Handhabungsvorrichtung, insbesondere eines mehrachsigen Industrieroboters, angeordnet.

In vorteilhafter Ausgestaltung wird bei Eindringen beziehungsweise Einführen des einen in das andere Führungselement die eingeschlossene Luft über wenigstens einen Entlüftungskanal, insbesondere eine Entlüftungsbohrung, im becher- oder buchsenartig ausgebildeten Führungselement im Bodenbereich beziehungsweise in Bodennähe verdrängt und damit der Widerstand reduziert.

Alternativ oder ergänzend dazu kann die Entlüftung auch mittels in das jeweilige stiftartige Führungswerkzeug seitlich eingeformte und/oder eingebrachte in Längsrichtung verlaufende Rillen oder Nuten durchgeführt und ein passgenauer Sitz bewirkt werden.

Demgemäß wird die jeweilige Handhabungsvorrichtung, insbesondere der mehrachsige Industrieroboter automatisch in die für eine Kalibrierung notwendigen Endlagen gezwungen. Aus dieser Erkenntnis folgt, dass die Genauigkeit der Kalibrierung nur von den mechanischen Eigenschaften des Kalibrierwerkzeuges, wie z.B. Fertigungsgenauigkeit, und nicht mehr von der Genauigkeit des Roboters abhängig ist. Die Kalibrierung wird mittels mechanischer Zwangsführung bewirkt, welche durch das Kalibierwerkzeug im Zusammenwirken mit der Messanordnung, insbesondere dem Kraftsensor bewirkt wird.

In vorteilhafter Ausgestaltung werden die ermittelten Objektkoordinatenpunkte und/oder die TCP-Koordinaten drahtlos oder drahtgebunden an die Steuerungseinrichtung der Handhabungsvorrichtung übermittelt.

In einer vorteilhaften Ausgestaltung wird der jeweilige Kalibrier- und/oder Ausrichtungsprozess unter Berücksichtigung vorbestimmbarer Parameter ein- oder mehrmalig durchlaufen, bis hinreichend viele Koordinatenpunkte, beispielsweise zur Festlegung des TCP, ermittelt sind und/oder die jeweils ermittelten Koordinatenpunkte hinreichend genau ermittelt und/oder bestätigt sind und/oder reproduzierbar innerhalb vorbestimmbarer Toleranzen liegen.

Die Ausführung der mechanischen Zwangsführung kann unterschiedliche Formen annehmen, welche anhand einiger nachfolgende Figuren und Ausführungsbeispiele weiter dargelegt werden soll.

Die weitere Darlegung der Erfindung sowie vorteilhafter Ausgestaltungen und Weiterbildungen erfolgt anhand einiger Figuren und Ausführungsbeispiele.

Es zeigen:
Fig. 1 Roboter in zwei Kalibrierpositionen für den TCP - mit im Wesentlichen zylindrischer Ausführung des Kalibrierungswerkzeugs,
Fig. 2 Roboter in zwei Kalibrierpositionen für den TCP - mit konischer Ausführung des Kalibrierwerkzeugs,
Fig. 3 Werkobjekt mit drei konischen spitzenartigen Führungselementen.

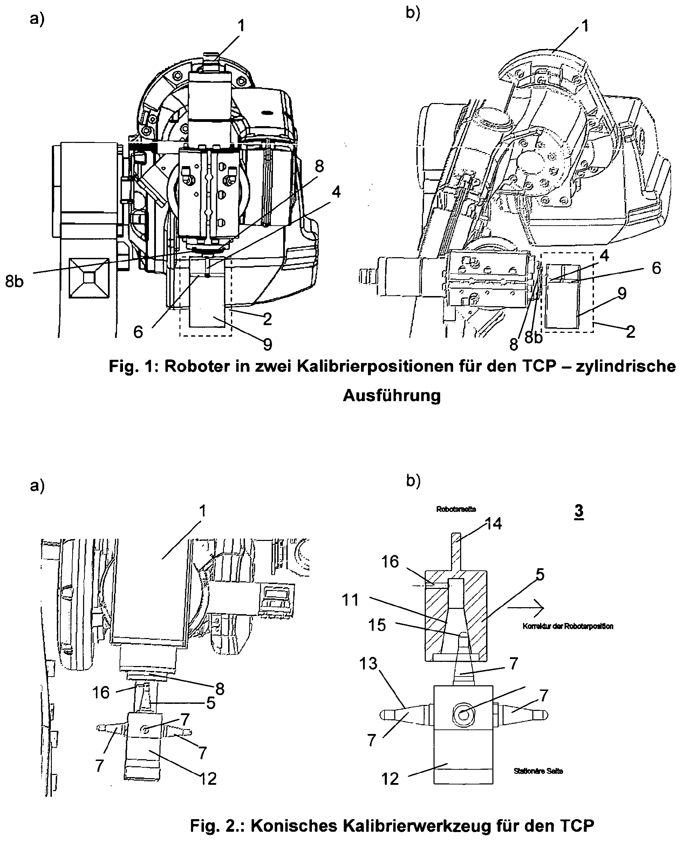

In Fig. 1 ist ein System zur automatisierten Kalibrierung und Ausrichtung einer Handhabungsvorrichtung angegeben, welches eine Handhabungsvorrichtung 1, insbesondere einen Roboter, sowie wenigstens eine Messanordnung 8 zur Erfassung wenigstens einer Regelgröße, sowie ein erfindungsgemäßes Kalibrierwerkzeug 2, mit wenigstens einem am distalen Ende 8b der Handhabungsvorrichtung 1 angeordneten ersten Führungselement 4, sowie wenigstens einem an einem Werkobjekt beziehungsweise Aufnehmer 9 vorgesehenen zum ersten Element 4 komplementären zweiten Führungselement 6 aufweist und wobei eine Regeleinrichtung (nicht gezeigt) vorgesehen ist, welche bei Einführen des einen Führungselementes 4 in das jeweilige andere Führungselement 6, insbesondere entlang einer vorbestimmbaren Koordinatenachse oder Richtung, beispielsweise in Fig. 1 a in z-Richtung und in Fig. 1 b in x-Richtung, im Zusammenwirken von Messanordnung 8 und Kaübrierwerkzeug 2 anhand der wenigstens einen Regelgröße die Handhabungsvorrichtung 1 automatisiert zu den notwendigen Kalibrierpositionen führt.

Als Werkobjekt wird dabei insbesondere auch der Aufnehmer 9,12 der jeweiligen Kalibriervorrichtung 2,3 beziehungsweise des jeweiligen Kalibrierwerkzeugs erachtet.

Demgemäß wird die jeweilige Handhabungsvorrichtung 1, insbesondere der mehrachsige Industrieroboter automatisch in die für eine Kalibrierung notwendigen Endlagen gezwungen, so dass die Genauigkeit der Kalibrierung nur von den mechanischen Eigenschaften des Kalibrierwerkzeuges 2, wie z.B. Fertigungsgenauigkeit, und nicht mehr von der Genauigkeit des Roboters 1 abhängig ist. Die Kalibrierung wird mittels mechanischer Zwangsführung bewirkt, weche durch das Kalibierwerkzeug 2 im Zusammenwirken mit der Messanordnung 8, insbesondere dem Kraftsensor bewirkt wird.

Das erste Führungsmittel 4 ist am distalen Ende 8b beziehungsweise an der Messanordnung 8 am distalen Ende 8b der Handhabungsvorrichtung 1 angeordnet und als Stift, konisch leicht zulaufend, ausgebildet.

Weiterhin ist vorgesehen, dass das Kalibrierwerkzeug 2 einen Aufnehmer 9 beziehungsweise ein Werkobjekt mit wenigstens drei eingeformten becher- oder buchsenartig ausgebildeten zweiten Führungselementen 6 zur Markierung beziehungsweise Vermessung des TCP (Tool Center Point) und Kalibrierung der Handhabungsvorrichtung 1 umfasst.

Die zweiten Führungselemente 6 sind dabei rechtwinkelig zueinander ausgerichtet.

Das in Fig. 2 angegebene System entspricht im Wesentlichen dem aus Fig. 1 bekannten System.

Jedoch ist hier ein leicht modifiziertes Kalibrierwerkzeug 3 eingesetzt.

Das aus Fig. 2 bekannte Kalibrierwerkzeug 3 für eine Handhabungsvorrichtung 1 umfasst zumindest zwei Führungselemente 5,7, wobei ein erstes becherartiges Führungselement 5 mit sich über einen Teilbereich erstreckendem Innenkonus 11 zur Anordnung am distalen Ende der Handhabungsvorrichtung 1 vorgesehen ist, und fünf dorn- oder stiftartige zweite Führungselemente 7, wobei lediglich vier gezeigt sind, mit sich über einen Teilbereich erstreckendem Konus 13 zur Kennzeichnung des TCP an einem Aufnehmer 12, vorgesehen ist und wobei das wenigstens eine erste 5 sowie das wenigstens eine zweite 7 Führungselement derart aufeinander angepasst und/oder zueinander kompatibel und/oder komplementär sind, dass das eine Element 7 in das dazu kompatible andere Element 5 einführbar ist und/oder ein Eingriff des einen Elements 7 in das jeweils andere Element 5 bewirkbar ist und/oder jeweils zwei komplementäre Elemente passgenau ineinander anordenbar sind.

Beide Führungselemente 5,7 weisen einen sich zumindest über einen Teilbereich des jeweiligen Elements erstreckenden Konus 11,13 auf, so dass eine leichtere Ineinanderführung des ersten 5 und zweiten 7 Führungselementes und eine verbesserte Passgenauigkeit beziehungsweise ein passgenauerer Sitz ermöglicht wird.

Das zweite Führungsmittel 7 ist bei stiftartiger Ausgestaltung im oberen, nämlich dem Werkobjekt 20 beziehungsweise dem Aufnehmer 12 abgewandten und dem jeweilig komplementären Führungsmittel 5 zugewandten Endbereich 15 abgerundet ausgebildet.

Das erste Führungsmittel 5 weist wenigstens ein Kupplungs- und/oder Kopplungselement 14 zur Anordnung am distalen Ende einer Handhabungsvorrichtung 1, insbesondere eines mehrachsigen Industrieroboters auf.

Auch ist vorgesehen, dass das jeweilige becher- oder buchsenartig ausgebildete Führungselement 5 im Bodenbereich beziehungsweise in Bodennähe wenigstens einen Entlüftungskanal 16, insbesondere eine Entlüftungsbohrung aufweist, so dass bei Einführen des jeweils komplementären stiftartigen Führungselementes 4,7 die eingeschlossene Luft entweichen kann.

In Fig. 1 können demgegenüber jeweils zumindest zwei der senkrecht zueinander stehenden/ausgerichteten Führungsmittel 6 als Durchgangskanäle verbunden sein, so dass keine zusätzlichen Entlüftungskanäle erforderlich sind.

Die lichte Weite wenigstens eines Teilbereichs des becher- oder buchsenartig ausgebildeten Führungselementes 5,6 und die Querschnittsfläche, insbesondere der Durchmesser und/oder Umfang, eines Teilbereichs des stiftartigen Führungselementes 4,7 sind derart aufeinander angepasst und abgestimmt, dass nach Einführen eines stiftartigen Elements 4,7 in das jeweilige becher- oder buchsenartige Element ein passgenauer und/oder formschlüssiger und/oder kraftschlüssiger Sitz und/oder Verbindung beider jeweiligen Elemente 4,6 oder 5,7 gegeben ist (Fig. 2a).

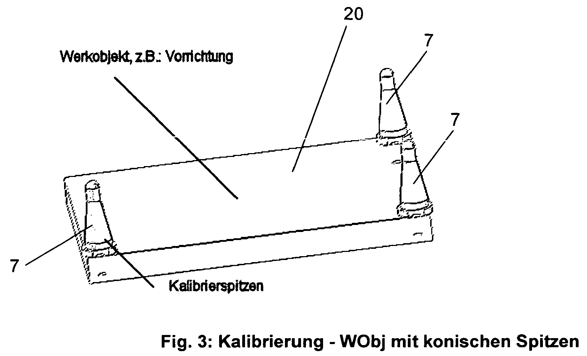

In Fig. 3 ist ein weiteres Werkobjekt 20, hier beispielhaft eine rechteckige metallische Platte mit an drei Eckpunkten angeordneten zweiten Führungsmitteln 7 gemäß Fig. 2 zur Vermessung und Kalibrierung von Werkobjekt 20 und Handhabungsvorrichtung 1 gezeigt.

Verfahrensgemäß wird zur automatisierten Kalibrierung und/oder Vermessung von Werkobjekt 20 und Handhabungsvorrichtung 1, die jeweilige Handhabungsvorrichtung 1 mittels Kalibrierwerkzeug 2,3 zu den notwendigen Kalibrier- beziehungsweise Vermessungspositionen geführt, das heißt die Handhabungsvorrichtung 1 beziehungsweise deren Endeffektor wird durch manuelles und/oder automatisches Anfahren und/oder Führen bis in den jeweiligen Nahbereich der einzelnen Führungselemente 6, im hier gezeigten Beispiel vorbeschriebene Kalibrierspitzen, und/oder bis zum Eingreifpunkt des jeweiligen Kalibrierwerkzeuges 2,3 beziehungsweise dessen Führungsmittel an das Werkobjekt 20 und die jeweiligen Vermessungs- beziehungsweise Kalibrierpositionen immer weiter angenähert und letztlich durch das jeweilige Kalibrierwerkzeug 2,3 automatisiert, insbesondere im Zusammenwirken mit Steuerungseinrichtung der Handhabungsvorrichtung 1, in die notwendigen Endlagen gezwungen und/oder geführt. Die Kalibrierung von Handhabungsvorrichtung 1 und Werkobjekt 20 sowie die Vermessung des Werkobjektes 20 erfolgt demgemäß mittels mechanischer Zwangsführung durch das Kalibierwerkzeug 2,3 im Zusammenwirken mit der jeweiligen Messanordnung 8 und insbesondere wenigstens einem Kraftsensor..

Durch vorgenanntes Verfahren ist auf effiziente Art und Weise eine genaue Vermessung und/oder Lagebestimmung beziehungsweise Orientierungsbestimmung eines zu be- oder verarbeitenden Werkstückes sowie Rekalibrierung einer Handhabungsvorrichtung ermöglicht.

Vorgenanntes Verfahren kann auch für die TCP- und Werkobjekt-Kalibrierung verwendet werden, des Weiteren ist die Kalibrierung weitestgehend automatisch beziehungsweise automatisiert möglich.

Dabei kann der jeweilige Kalibrier- und/oder Ausrichtungsprozess unter Berücksichtigung vorbestimmbarer Parameter ein- oder mehrmalig durchlaufen werden, bis hinreichend viele Koordinatenpunkte, beispielsweise zur Festlegung des TCP, ermittelt sind und/oder die jeweils ermittelten Koordinatenpunkte hinreichend genau ermittelt und/oder bestätigt sind und/oder reproduzierbar innerhalb vorbestimmbarer Toleranzen liegen.

## Patentansprüche

1. Kalibrierwerkzeug (2,3) für eine Handhabungsvorrichtung (1) mit zumindest zwei Führungselementen (4,5,6,7), wobei wenigstens ein erstes Führungselement (4,5) zur Anordnung am distalen Ende der jeweiligen Handhabungsvorrichtung (1) vorgesehen ist, und wenigstens ein zweites Führungselement (6,7) zur Kennzeichnung eines Koordinatenpunktes und einer Orientierung, insbesondere des TCP oder eines Werkobjektes (5,12,20), vorgesehen ist und wobei das wenigstens eine erste (4,5) sowie das wenigstens eine zweite (6,7) Führungselement derart aufeinander angepasst und/oder zueinander kompatibel und komplementär sind, dass das eine Element in das dazu kompatible andere Element einführbar ist oder ein Eingriff des einen Elemente in das jeweils andere Element bewirkbar ist und jeweils zwei komplementäre Elemente (4,6 ; 5,7) passgenau ineinander anordenbar sind, **dadurch gekennzeichnet, dass** das eine Führungselement im Wesentlichen zylindrisch als Stift oder Stab oder Dorn oder Zapfen, ausgebildet ist und bei stiftartiger Ausgestaltung im oberen, nämlich dem Werkobjekt sowie dem Aufnehmer abgewandten und dem jeweilig komplementären Führungsmittel zugewandten Endbereich, spitz zulaufend, konisch zugespitzt oder abgerundet ausgebildet und vom Boden zur Spitze hin sich verjüngend ausgestaltet oder sich in Längsrichtung verjüngend ausgebildet ist, und das dazu komplementäre Führungselement als im Wesentlichen zylindrische Buchse und/oder Becher ausgebildet ist, wobei das becher- oder buchsenartig ausgebildete Führungselement im Bodenbereich beziehungsweise in Bodennähe wenigstens einen Entlüftungskanal aufweist so dass bei Einführen des jeweils komplementären stiftartigen Führungselementes die eingeschlossene Luft entweichen kann und alternativ oder ergänzend dazu in das jeweilige stiftartige Führungswerkzeug seitlich in Längsrichtung verlaufende Rillen oder Nuten eingeformt oder eingearbeitet sind, damit die beim Einführen eingeschlossene Luft über diese Rillen oder Nuten entweichen kann und ein passgenauer Sitz gegeben ist.

2. Kalibrierwerkzeug (2,3) nach Anspruch 1, **dadurch gekennzeichnet, dass** weist wenigstens eines der Führungselemente (4,5,6,7) einen sich zumindest über einen Teilbereich des Elements erstreckenden Konus auf, so dass eine leichtere Ineinanderführung des jeweiligen ersten und zweiten Führungselementes und eine verbesserte Passgenauigkeit beziehungsweise ein passgenauerer Sitz ermöglicht wird.

3. Kalibrierwerkzeug (2,3) nach Anspruch 1 oder 2, **dadurch gekennzeichnet, dass** das wenigstens eine erste oder zweite Führungselement (4,7) im Wesentlichen zylindrisch, insbesondere als Stift oder Stab oder Dorn oder Zapfen, ausgebildet, wobei grundsätzlich unterschiedliche geometrische Querschnittsflächen, wie beispielsweise elliptisch, kreisförmig, dreieckig oder aber ach vier und mehreckig vorsehbar sind.

4. Kalibrierwerkzeug (2,3) nach einem der vorherigen Ansprüche, **dadurch gekennzeichnet, dass** das wenigstens eine erste oder zweite Führungselement (6,5) als im Wesentlichen zylindrische Buchse und/oder Becher ausgebildet ist, wobei grundsätzlich unterschiedliche geometrische Querschnittsflächen, wie insbesondere elliptisch, kreisförmig, dreieckig oder aber vier und/oder mehreckig vorsehbar sind.

5. Kalibrierwerkzeug (3) nach einem der vorherigen Ansprüche, **dadurch gekennzeichnet, dass** das jeweilige Kalibrierwerkzeug (2,3) wenigstens einen Aufnehmer (12) und/oder Werkobjekt (9) zur Aufnahme oder Anordnung wenigstens eines zweiten Führungselementes (7,6) aufweist.

6. Kalibrierwerkzeug (3) nach einem der vorherigen Ansprüche, **dadurch gekennzeichnet, dass** das jeweilige zweite Führungselement (7) bei stiftartiger Ausbildung an den Aufnehmer (12) oder ein Werkobjekt (20) angeformt und/oder einstückig mit diesem ausgebildet oder aber, insbesondere lösbar, an diesem angeordnet, insbesondere angeschraubt oder verschraubt, ist.

7. Kalibrierwerkzeug (2,3) nach einem der vorherigen Ansprüche, **dadurch gekennzeichnet, dass** das jeweilige Führungselement bei buchsen- oder becherartiger artiger Ausbildung an den Aufnehmer (12) oder ein Werkobjekt (20) angeformt und/oder einstückig mit diesem ausgebildet oder aber, insbesondere lösbar, an diesem angeordnet ist.

8. Kalibrierwerkzeug (2,3) nach einem der Ansprüche 1 bis 6, **dadurch gekennzeichnet, dass** das jeweilige zweite Führungselement (6) bei buchsen- oder becherartiger Ausgestaltung auch als Ausnehmung in den jeweiligen Aufnehmer und/oder ein jeweiliges Werkobjekt (9) eingeformt ist.

9. Kalibrierwerkzeug (2,3) nach einem der vorherigen Ansprüche, **dadurch gekennzeichnet, dass** das jeweilige Führungsmittel (4,5,6,7) mehrere Teilbereiche umfasst, welche einen konischen Verlauf, das heißt mit einer sich über eine Länge ändernder Querschnittsfläche, insbesondere sich änderndem Durchmesser und/oder Umfang und/oder lichte Weite, oder einen gleichmäßigen beziehungsweise konstanten Verlauf, das heißt, mit einer sich über eine vorbestimmte Teilbereichslänge gleichbleibender Querschnittsfläche, insbesondere gleichbleibendem Durchmesser und/oder Umfang und/oder lichte Weite oder eine Kombination daraus aufweist.

10. System zur automatisierten Kalibrierung und Ausrichtung einer Handhabungsvorrichtung, welche eine Handhabungsvorrichtung (1), insbesondere einen Roboter, sowie wenigstens eine Messanordnung (8) zur Erfassung wenigstens einer Regelgröße, sowie ein Kalibrierwerkzeug nach einem der Ansprüche 1 bis 9 mit wenigstens einem am distalen Ende der Handhabungsvorrichtung (1) angeordneten ersten Führungselement (4,5), sowie wenigstens einem an einem Werkobjekt (9,20) vorgesehenen zum ersten Element (4,5) komplementären zweiten Führungselement (6,7) aufweist und wobei eine Regeleinrichtung vorgesehen ist, welche bei Einführen des einen Führungselementes in das jeweilige andere Führungselement, insbesondere entlang einer vorbestimmbaren Koordinatenachse oder Richtung, im Zusammenwirken von Messanordnung (8) und Kalibrierwerkzeug (2,3) anhand der wenigstens einen Regelgröße die Handhabungsvorrichtung (1) automatisiert zu den notwendigen Kalibrierpositionen führt, wobei die wenigstens eine Messanordnung (8) wenigstens einen Sensor zur Erfassung von Kräften und/oder Momenten und/oder Kraft- und/oder Momentendifferenzen aufweist.

11. System nach Anspruch 10, **dadurch gekennzeichnet, dass** wenigstens ein Aufnehmer (12) zur Aufnahme oder Anordnung des wenigstens einen zweiten Führungselementes (7) vorgesehen ist, wobei zur Markierung beziehungsweise Kalibrierung des TCP wenigstens drei zweite Führungselemente (7) am Aufnehmer vorgesehen sind.

12. System nach einem der Ansprüche 10 oder 11, **dadurch gekennzeichnet, dass** wenigstens eine Messanordnung (8) insbesondere am distalen Ende der Handhabungsvorrichtung (1) zwischen Handhabungsvorrichtung (1) und dem wenigstens einen ersten Führungselement (4,5) angeordnet und/oder mit diesen physisch verbunden ist.

13. Verfahren zur automatisierten Kalibrierung und Ausrichtung einer Handhabungsvorrichtung (1), wobei mittels wenigstens einer an einer Handhabungsvorrichtung (1) angeordneten Messanordnung (8) sowie einem Kalibrierwerkzeug (2,3) nach einem der Ansprüche 1 bis 9 wenigstens eine Regelgröße beim Aufeinanderzufahren von erstem und zweitem Führungselement, insbesondere entlang einer vorbestimmbaren Koordinatenachse oder Richtung, erfasst und im Zusammenwirken von Messanordnung (8) und Kalibrierwerkzeug (2,3), insbesondere erstem sowie zweiten Führungsmittel, mittels einer Regeleinrichtung anhand der erfassten Regelgrößenmesswerte eine Anpassung der Bewegung beziehungsweise der Bewegungsbahn der Handhabungsvorrichtung (1) durchgeführt wird, derart, dass bei Einführen und/oder Eingreifen des einen Führungselementes in das jeweilige andere Führungselement die Handhabungsvorrichtung beziehungsweise deren Führungselement automatisiert zu den notwendigen Kalibrierpositionen und/oder in die notwendigen Endlagen gezwungen und/oder geführt wird, wobei als Regelgröße die entlang wenigstens einer vorbestimmbaren Richtung zwischen erstem und zweitem Führungselement wirkende Kraft und/oder Moment und/oder deren Unterschiede zu wenigstens einem vorbestimmbaren Referenzwert erfasst wird, wobei insbesondere die Anpresskraft beziehungsweise Auflagekraft zwischen erstem und zweitem Führungselement erfasst und/oder auf einen vorbestimmbaren Referenzwert geregelt wird.

## Claims

1. Calibration tool (2, 3) for a handling apparatus (1) having at least two guide elements (4, 5, 6, 7), wherein at least one first guide element (4, 5) is intended to be arranged at the distal end of the respective handling apparatus (1) and at least one second guide element (6, 7) is intended to identify a coordinate point and an orientation, in particular of the TCP or a work object (5, 12, 20), and wherein the at least one first guide element (4, 5) and the at least one second guide element (6, 7) are matched to one another and/or are compatible with and complement one another in such a way that one element can be inserted into the compatible other element or one element can engage into the respectively other element and in each case two complementary elements (4, 6; 5, 7) can be arranged such that they fit accurately one into the other, **characterized in that** one guide element is substantially cylindrical in the form of a pin or rod or mandrel or journal and, in the case of a pin-like configuration in the upper end region, specifically the end region which is averted from the work object and the receiver and faces the respectively complementary guide means, tapers to a point, is conically tapered or is rounded and tapers from the base to the tip or tapers in the longitudinal direction, and the complementary guide element is in the form of a substantially cylindrical bushing and/or cup, wherein the guide element which is in the form of a cup or bushing has at least one ventilation duct in the base region or in the vicinity of the base, so that, when the respectively complementary pin-like guide element is inserted, the enclosed air can escape and, as an alternative or in addition to this, channels or grooves which run laterally in the longitudinal direction are formed or incorporated into the respective pin-like guide tool, so that the air which is included during insertion can escape via these channels or grooves and an accurate fit is achieved.

2. Calibration tool (2, 3) according to Claim 1, **characterized in that** at least one of the guide elements (4, 5, 6, 7) has a cone which extends at least over a subregion of the element, so that it is made easier to guide the respective first and second guide elements one into the other and improved fitting accuracy or a more accurate fit is possible.

3. Calibration tool (2, 3) according to Claim 1 or 2, **characterized in that** the at least one first or second guide element (4, 7) is substantially cylindrical, in particular in the form of a pin or rod or mandrel or journal, wherein geometric cross-sectional areas which are fundamentally different, such as, for example, elliptical, circular, triangular or else rectangular or polygonal cross-sectional areas, can be provided.

4. Calibration tool (2, 3) according to one of the preceding claims, **characterized in that** the at least one first or second guide element (6, 5) is in the form of a substantially cylindrical bushing and/or cup, wherein geometric cross-sectional areas which are fundamentally different, such as, in particular, elliptical, circular, triangular or else rectangular and/or polygonal cross-sectional areas, can be provided.

5. Calibration tool (3) according to one of the preceding claims, **characterized in that** the respective calibration tool (2, 3) has at least one receiver (12) and/or work object (9) for receiving or arranging at least one second guide element (7, 6).

6. Calibration tool (3) according to one of the preceding claims, **characterized in that** the respective second guide element (7), when it is in the form of a pin, is integrally formed on the receiver (12) or a work object (20) and/or is formed in one piece with the said receiver or work object or else is arranged on, in particular screwed onto or screw-connected to, the said receiver or work object, in particular in a detachable manner.

7. Calibration tool (2, 3) according to one of the preceding claims, **characterized in that** the respective guide element, when it is in the form of a bushing or cup, is integrally formed on the receiver (12) or a work object (20) and/or is formed in one piece with the said receiver or work object or else is arranged on the said receiver or work object, in particular in a detachable manner.

8. Calibration tool (2, 3) according to one of Claims 1 to 6, **characterized in that** the respective second guide element (6), when it is designed in the form of a bushing or cup, is also formed as a recess in the respective receiver and/or a respective work object (9) .

9. Calibration tool (2, 3) according to one of the preceding claims, **characterized in that** the respective guide means (4, 5, 6, 7) comprises a plurality of subregions which have a conical profile, that is to say with a cross-sectional area which changes over a length, in particular a changing diameter and/or circumference and/or clear width, or a uniform or constant profile, that is to say with a cross-sectional area which is constant over a predetermined subregion length, in particular a constant diameter and/or circumference and/or clear width, or a combination thereof.

10. System for automated calibration and orientation of a handling apparatus which has a handling apparatus (1), in particular a robot, and also at least one measurement arrangement (8) for detecting at least one control variable, and also a calibration tool according to one of Claims 1 to 9 having at least one first guide element (4, 5) which is arranged at the distal end of the handling apparatus (1) and also at least one second guide element (6, 7) which is provided on a work object (9, 20) and complements the first element (4, 5), and wherein a control device is provided, which control device, when one guide element is inserted into the respective other guide element, in particular along a predeterminable coordinate axis or direction, with interaction between the measurement arrangement (8) and the calibration tool (2, 3) on the basis of the at least one control variable, leads the handling apparatus (1) to the necessary calibration positions in an automated manner, wherein the at least one measurement arrangement (8) has at least one sensor for detecting forces and/or moments and/or differences in force and/or moment.

11. System according to Claim 10, **characterized in that** at least one receiver (12) is intended to receive or arrange the at least one second guide element (7), wherein at least three second guide elements (7) are provided on the receiver for marking or calibrating the TCP.

12. System according to either of Claims 10 and 11, **characterized in that** at least one measurement arrangement (8) is arranged, in particular at the distal end of the handling apparatus (1), between the handling apparatus (1) and the at least one first guide element (4, 5) and/or is physically connected to the said handling apparatus and the said at least one first guide element.

13. Method for calibrating and orienting a handling apparatus (1) in an automated manner, wherein at least one control variable is detected by means of at least one measurement arrangement (8), which is arranged on a handling apparatus (1), and also a calibration tool (2, 3) according to one of Claims 1 to 9 when the first and the second guide element are moved toward one another, in particular along a predeterminable coordinate axis or direction, and the movement or the movement path of the handling apparatus (1) is adapted, with interaction between the measurement arrangement (8) and the calibration tool (2, 3), in particular first and also second guide means, by means of a control device on the basis of the detected control variable measurement values in such a way that, when one guide element is inserted and/or engages into the respective other guide element, the handling apparatus or the guide element of said handling apparatus is forced and/or guided to the required calibration positions and/or into the necessary end positions in an automated manner, wherein the force and/or moment which acts along at least one predeterminable direction between the first and the second guide element and/or the differences between said force and/or moment and at least one predeterminable reference value is detected as the control variable, wherein, in particular, the contact-pressure force or bearing force between the first and the second guide element is detected and/or adjusted to a predeterminable reference value.

## Revendications

1. Outil d'étalonnage (2, 3) pour ensemble de manipulation (1) présentant au moins deux éléments de guidage (4, 5, 6, 7), au moins un premier élément de guidage (4, 5) étant prévu pour être disposé à l'extrémité distale de l'ensemble de manipulation (1) et au moins un deuxième élément de guidage (6, 7) étant prévu pour caractériser un point de coordonnées et une orientation, en particulier du TCP ou d'un objet de travail (5, 12, 20),
le ou les premiers éléments de guidage (4, 5) et le ou les deuxièmes éléments de guidage (6, 7) étant adaptés l'un à l'autre et/ou mutuellement compatibles et complémentaires de telle sorte qu'un élément puisse être inséré dans l'autre élément qui lui est compatible ou qu'un engagement d'un élément dans l'autre élément puisse être réalisé et que deux éléments complémentaires (4, 6; 5, 7) puissent être disposés l'un dans l'autre de manière étroitement ajustée, **caractérisé en ce que**
un élément de guidage est configuré essentiellement en cylindre, sous la forme d'une tige, d'un barreau, d'un mandrin ou d'un tourillon,
**en ce qu'**au cas où il est configuré comme tige, il est pointu coniquement ou arrondi dans sa partie d'extrémité non tournée vers l'objet de travail et le logement et tourné vers le moyen de guidage complémentaire, en pointe, se rétrécit de la base à la pointe ou se rétrécit dans le sens de sa longueur,
**en ce que** l'élément de guidage qui lui est complémentaire est configuré comme douille et/ou godet essentiellement cylindrique,
**en ce que** l'élément de guidage configuré en godet ou en douille présente au niveau de son fond ou à proximité de son fond au moins un canal d'évent, de telle sorte que l'air inclus lors de l'insertion de l'élément de guidage complémentaire en forme de tige puisse s'échapper et
**en ce qu'**en variante ou en complément, des nervures ou des rainures s'étendant dans le sens de la longueur sont formées ou ménagées dans chaque outil de guidage en forme de tige pour qu'ainsi l'air inclus lors de l'insertion puisse s'échapper par ces rainures ou nervures et que l'on puisse obtenir une pose étroitement ajustée.

2. Outil d'étalonnage (2, 3) selon la revendication 1, **caractérisé en ce qu'**au moins l'un des éléments de guidage (4, 5, 6, 7) présente un cône qui s'étend au moins sur une partie de l'élément de manière à permettre une insertion plus aisée de chaque premier et deuxième élément de guidage, un ajustement meilleur ou une pose plus ajustée.

3. Outil d'étalonnage (2, 3) selon les revendications 1 ou 2, **caractérisé en ce que** le ou les deuxièmes éléments de guidage (4, 7) sont configurés essentiellement en cylindre, en particulier comme tige, barre, mandrin ou tourillon, des surfaces transversales de géométrie fondamentalement différente, par exemple en hélice, en cercle, en triangle ou même en quadrilatère ou en polygone pouvant être prévues.

4. Outil d'étalonnage (2, 3) selon l'une des revendications précédentes, **caractérisé en ce que** le ou les premiers ou deuxièmes éléments de guidage (6, 5) sont configurés essentiellement en forme de douille ou de godet cylindrique, des surfaces de section transversale de géométries fondamentalement différentes, par exemple en hélice, en cercle, en triangle ou même en quadrilatère ou en polygone pouvant être prévues.

5. Outil d'étalonnage (3) selon l'une des revendications précédentes, **caractérisé en ce que** le ou les outils d'étalonnage (2, 3) présentent au moins un logement (12) et/ou un objet de travail (9) qui reprend ou permet de disposer a moins un deuxième élément de guidage (7, 6).

6. Outil d'étalonnage (3) selon l'une des revendications précédentes, **caractérisé en ce que** lorsque le deuxième élément de guidage (7) est configuré en forme de tige, il est formé et/ou configuré d'un seul tenant avec le logement (12) ou un objet de travail (20) ou est disposé en particulier de manière libérable sur ce dernier, en particulier par vissage.

7. Outil d'étalonnage (2, 3) selon l'une des revendications précédentes, **caractérisé en ce que** lorsque l'élément de guidage est configuré en forme de douille ou de godet, il est formé et/ou configuré d'un seul tenant avec le logement (12) ou un objet de travail (20), ou même disposé sur ce dernier de manière en particulier libérable.

8. Outil d'étalonnage (2, 3) selon l'une des revendications 1 à 6, **caractérisé en ce que** lorsque le deuxième élément de guidage (6) est configuré en forme de douille ou de godet, il est également formé comme découpe dans le logement et/ou l'objet de travail (9) concernés.

9. Outil d'étalonnage (2, 3) selon l'une des revendications précédentes, **caractérisé en ce que** chaque moyen de guidage (4, 5, 6, 7) comporte plusieurs parties qui présentent une évolution en cône, c'est-à-dire dont la surface en coupe transversale, en particulier le diamètre, le périmètre ou la largeur, varient suivant la longueur, ou une évolution uniforme ou constante, c'est-à-dire dont la surface transversale, en particulier le diamètre, le périmètre, la largeur ou une de leurs combinaisons, restent constantes sur une partie prédéterminée de la longueur.

10. Système d'étalonnage et d'alignement automatiques d'un ensemble de manipulation qui présente un ensemble de manipulation (1), en particulier un robot, au moins un système de mesure (8) qui saisit au moins une grandeur de réglage ainsi qu'un outil d'étalonnage selon l'une des revendications 1 à 9, qui présente au moins un premier élément de guidage (4, 5) disposé à l'extrémité distale de l'ensemble de manipulation (1) et au moins un deuxième élément de guidage (6, 7), complémentaire du premier élément (4, 5) et prévu sur un objet de travail (9, 20), un dispositif de réglage étant prévu pour guider de manière automatique l'ensemble de manipulation (1) vers les positions d'étalonnage nécessaires lors de l'insertion d'un élément de guidage dans l'autre élément de guidage, en particulier le long d'un axe de coordonnées ou d'une direction prédéterminées, par coopération entre l'ensemble de mesure (8) et l'outil d'étalonnage (2, 3) et à l'aide de la ou des grandeurs de régulation, le ou les ensembles de mesure (8) présentant au moins un capteur de saisie de forces, de couples et/ou de différences de forces et/ou de couples.

11. Système selon la revendication 10, **caractérisé en ce qu'**au moins un logement (12) qui reprend l'ensemble constitué du ou des deuxièmes éléments de guidage (7), au moins trois deuxièmes éléments de guidage (7) étant prévus sur le logement pour le repérage ou l'étalonnage du TCP.

12. Système selon l'une des revendications 10 ou 11, **caractérisé en ce qu'**au moins un ensemble de mesure (8) est disposé à l'extrémité distale de l'ensemble de manipulation (1), entre l'ensemble de manipulation (1) et le ou les premiers éléments de guidage (4, 5) et/ou est relié physiquement à ce ou ces derniers.

13. Procédé d'étalonnage et d'alignement automatique d'un ensemble de manipulation (1), dans lequel au moyen d'au moins un ensemble de mesure (8) disposé sur un ensemble de manipulation (1) ainsi que d'un outil d'étalonnage (2, 3) selon l'une des revendications 1 à 9, au moins une grandeur de régulation est saisie lors de l'approche du premier et du deuxième élément de guidage, en particulier le long d'un axe de coordonnées ou d'une direction prédéterminés, et en coopération entre l'ensemble de mesure (8) et l'outil d'étalonnage (2, 3), en particulier un premier ainsi qu'un deuxième moyen de guidage, au moyen d'un dispositif de régulation, à l'aide des valeurs de mesure de grandeurs de régulation qui ont été saisies, une adaptation du déplacement ou du parcours de déplacement de l'ensemble de manipulation (1) est réalisé de telle sorte que lors de l'insertion et/ou de l'engagement d'un élément de guidage dans l'autre élément de guidage, l'ensemble de manipulation ou son élément de guidage sont amenés de manière forcée et/ou guidés de manière automatique vers les positions d'étalonnage nécessaires et/ou les positions d'extrémité nécessaires, la grandeur de régulation saisie étant la force, les couples et/ou leurs différences par rapport à une valeur de référence prédéterminée agissant entre le premier et le deuxième élément de guidage le long d'au moins une direction prédéterminée, la force de poussée ou la force d'appui entre le premier élément de guidage étant saisies et/ou régulées à une valeur de référence prédéterminée.
